# EUROPEAN PATENT SPECIFICATION

(11) **EP 1 979 697 B1**
(45) Date of publication and mention of the grant of the patent: **14.03.2012**
(21) Application number: 07706047.3
(22) Date of filing: 25.01.2007
(51) Int. Cl.: F28D 20/02

(54) **THERMAL ENERGY STORAGE APPARATUS**
WÄRMEENERGIESPEICHERVORRICHTUNG
APPAREIL DE STOCKAGE D`ENERGIE THERMIQUE

(30) Priority: 26.01.2006 IL 17337306
(43) Date of publication of application: 15.10.2008
(60) Divisional application: 09160994.1
(73) Proprietor: Nuclear Research Center-Negev, 84190 Beer-sheva (IL)
(72) Inventor: SAGIE, Dan, 84750 Beer-sheva (IL); ASSIS, Eli, 84476 Beer-sheva (IL)
(74) Representative: Vossius & Partner
(86) International application number: PCT/IL2007/000104
(87) International publication number: WO 2007/086065

(56) References cited:
- EP-A- 1 455 155
- JP-A- 2000 074 584
- US-A- 4 250 958
- US-A- 5 220 954

## Description

### Field of the Invention

The present invention relates to the field of thermal energy storage. More particularly, the invention relates to a phase change materials (PCM) based method and apparatus, with improved thermal conductivity for storing and delivering thermal energy.

### Background of the Invention

Thermal Energy Storage (TES) technologies provide efficient and cost effective solutions in various heat process industries (e.g., solar heat systems). Common TES technologies that are used nowadays might be classified to either sensible heat or fusion heat storage. The present invention aims to provide an efficient fusion heat storage apparatus based on a phase change material.

Phase change thermal energy storage is based on the large heat of fusion of some Phase Change Materials (PCM, e.g., paraffin waxes, inorganic salts). Typically, in this type of energy storage applications the phase of the PCM changes from solid state into liquid state during storage of thermal energy therein, and from liquid state back into solid state while delivering the stored thermal energy therefrom. Liquid to vapor phase change (e.g., steam accumulator), and vice versa, may be similarly used in such applications to store and deliver thermal energy. The addition, or extraction, of thermal energy to/from the PCM results in a change in its phase state with corresponding absorption/rejection of thermal energy.

While the following description mainly relates to PCMs which phase is changed between their solid and liquid phases it should be clear that the present invention pertains also to other types of PCMs, for example, PCMs which phase change between liquid and gaseous states (e.g., water), or between solid and gaseous states.

A preferred approach of PCM based thermal energy storage apparatus designs is to construct the apparatus from a cylindrical container comprising a PCM. The outer surface of the container is being in contact with a circulated heat exchange fluid used for storing or extracting thermal energy to/from the PCM comprised therein. During the process of extracting the thermal energy from the PCM (herein after freezing cycle) the phase of the PCM adjacent to the inner surface of the container is the first to freeze (change from liquid state into solid state), which significantly reduces the heat conductivity of the apparatus, and as a result substantially slows down the heat extraction process. Similarly, storing the thermal energy in the PCM (hereinafter melting cycle) is also substantially slow due to the low heat conductivity of the apparatus while the PCM is in its solid state.

US 6,400,896 describes a heat exchanger comprising heat energy transfer elements extending through the PCM. This heat exchanger is comprised from a container containing the PCM, and the heat energy transfer elements, are located in a lower portion of the container. Heat exchange fluid is circulated in an annular space defined between the outer surface of the container and a tube surrounding the container. The heat energy transfer elements extending through the PCM are electrical resistance heated rods or coils, or tubes through which a high temperature fluid is flowed to initiate melting of the PCM during melt cycles.

US 5,220,954 also describes a heat exchanger comprising a PCM contained in a container surrounded by a tube wherein a heat exchange fluid is circulated in the annular space defined between the outer surface of the container and the surrounding tube. The annular space is divided by at least two divider walls into upper and lower passageways to allow streaming the heat exchange fluid via the lower passageway during the melt cycle, and via the upper passageway during the freeze cycle. One embodiment of the heat exchanger comprises a central tube extending through the central region of the container and connected to the upper flow passageway, wherein heat conducting fins radially extends outwardly from the central tube. The embodiment of figures 9 and 10 of this document can be considered as the closest prior art. This embodiment discloses a cruciform grid which comprises strips as heat conducting members.

EP 1455155 describes a PCM element comprising a casing including the PCM and an inner tube concentrically disposed in the casing for routing a cooling stream of liquid or gas therethrough. The PCM element further comprises a metal braid or fins attached to the inner tube for rapidly delivering the external heat absorbed via the outer surface of the casing to the interior of the PCM element which may be then discharged via a cooling liquid flowing in the inner tube.

Another proposed solution described in "Thermal energy storage technology industrial process heat applications", Proceedings of ISEC2005: 2005 international solar energy conference, August 6-12, 2005, Orlando, Florida, by Rainer T. et al, suggests to reduce the heat conduction resistance of PCM storage apparatuses by embedding the PCM in a matrix made of a material with high thermal conductivity.

The methods described above have not yet provided satisfactory solutions for efficiently storing thermal energy in a PCM based thermal energy storage apparatus and rapidly extracting the stored thermal energy therefrom. A cost effective method has not been introduced as well. Therefore there is a need for an improved thermal energy storage apparatus that overcomes the above mentioned problems.

It is therefore an object of the present invention to provide a PCM based method and apparatus which provides improved heat conductivity and thereby enable rapidly, high power storing and extracting of thermal energy.

It is a further object of the present invention to provide a simplified and cost effective method and apparatus for rapidly, high power storing and extracting of thermal energy.

It is another object of the present invention to provide a generic thermal energy storage unit which is suitable for a wide range of applications (e.g. Heat management (regulation) in any Process in the Heat industry).

### Summary of the Invention

It has now been found that it is possible to construct an energy storage apparatus capable of rapidly delivering thermal energy to/from a PCM contained in a heat conducting container comprising a thermal energy transfer element which provides a plurality of heat transfer paths between the central space of the heat conducting container and its inner wall. This new construction allow rapidly delivering thermal energy to/from the apparatus via a heat exchange fluid flowing in contact with the wall of the heat conducting container without requiring that the heat exchange fluid be circulated inside said energy storage apparatus.

The present invention is directed to a thermal energy storage apparatus for delivering thermal energy to or from a PCM according to claim 1 or 4. The energy storage apparatus comprises an elongated heat conducting container having an insertable thermal energy transfer element placed therein, wherein the thermal energy transfer element comprises a plurality of heat transfer paths in the form of transversely disposed flexible heat conducting members, at least a portion of which are in contact with the inner wall of the heat conducting container, and wherein the plurality of members are arranged along a longitudinal axis of the heat transfer element and occupy cross sectional portions thereof.

The plurality of heat conducting members may be attached to a central supporting member made from a heat conducting rod, tube, conduit, or wires, such that they may be tilted about their lateral axes. The strips or wires are according to claim 4 curved in a shape of a helical star, the base points of which are attached to the central supporting member and its apex points are in contact with the inner wall of the heat conducting container.

The term helical star generally refers to a helix having a cross-sectional star polygon shape geometry formed by a plurality of base and apex points, such that said base points forms an inner cross-sectional diameter, and said apex points forms an outer cross-sectional diameter, of said helical star.

Non overlapping heat conducting paths are obtained in the cross sectional portions of the thermal energy transfer element.

According to claim 1 the heat conducting members are made from heat conducting wires or strips which may be adhered to, welded to, or threaded through, the central supporting member.

A method for manufacturing a thermal energy storage apparatus comprises providing a heat conducting container, installing a thermal energy transferring element in the heat conducting container, partially or fully filling the interior of said heat conducting container with a PCM via an opening thereof, and sealing the heat conducting container by one or more caps, wherein the thermal energy transfer element is adapted to be flexibly inserted into the heat conducting container such that its heat conducting members are pressed against the inner wall of the heat conducting container.

The heat conducting members of the thermal energy transferring element are preferably attached to a central supporting member.

The thermal energy transferring element and the PCM may be inserted into the heat conducting container via an opening thereof, which is then sealed by a cap such that the internal surface of said cap contacts the tip of the central supporting member, while the other tip of said central supporting member contacts the internal surface of the opposite end of the container. Alternatively, the heat conducting container may comprise two openings, one of which is sealed by a cap before installing the thermal energy transferring element therein and filling its interior by the PCM, and wherein the other opening is sealed by another cap afterwards, such that the internal surface of said caps contacts the tips of the central supporting member.

The invention is directed to a thermal energy storage system according to claim 7.

The thermal energy storage apparatuses may comprise central conduits to which the thermal energy transferring elements are attached, the extremities of said central conduits protrudes outwardly from said thermal energy storage apparatuses, wherein the thermally insulated vessel further comprises two auxiliary chambers each of which being in fluid flow communication with said central conduits via their protruding extremities for streaming another heat exchange fluid therethrough.

### Brief Description of the Drawings

The present invention is illustrated by way of example in the accompanying figures, in which similar references consistently indicate similar elements:
- Figs. 1A to 1C schematically illustrates a thermal energy storage apparatus of the present invention which is implemented utilizing a brush shaped insert;
- Figs. 2A to 2D schematically illustrates a thermal energy storage apparatus of the present invention which is implemented utilizing a helical star shaped insert;
- Figs. 3A to 3B schematically illustrates a thermal energy storage apparatus implemented utilizing a mesh insert which does not form part of the invention.
- Fig. 4 schematically illustrates a thermal energy storage application comprising a plurality of thermal energy storage tubes;
- Fig. 5A schematically illustrates a longitudinal-section view of a thermal energy storage apparatus of the present invention having a central conduit;
- Fig. 5B schematically illustrates a thermal energy storage application having two different flow paths for heat exchange fluids.

### Detailed Description of Preferred Embodiments

The present invention provides a PCM based thermal energy storage apparatus (also referred to as energy storage tube) in which the thermal energy transfer is substantially improved by increasing the apparatus heat conductivity, thereby providing relatively fast and efficient thermal energy storage and release times. As will be described in details hereinbelow the thermal energy storage apparatus of the present invention is relatively simple and easy to construct and its manufacture costs are relatively low.

In general, the thermal energy storage apparatus of the present invention is comprised of a heat conducting container (e.g., tube) comprising a PCM and a heat conducting insert comprising a plurality of heat conducting members, wherein said heat conducting members pass in the inner space of the heat conducting container and in thermal contact with its inner wall. In this way a plurality of heat conducting paths are obtained between the central space of the container and its inner wall, which substantially improve the heat conductivity of the apparatus. The central member is preferably manufactured from heat conducting material(s) in form of a rod, hollow tube, conduit, or braid of wires. The PCM is preferably a type of inorganic salt such as NaNO₃.

Due to this unique structure of the thermal energy storage apparatus of the invention the thermal energy stored in the PCM in a central space thereof can be efficiently delivered to a heat exchange fluid via the insert provided therein and via its walls. More particularly, the plurality of heat conducting paths, obtained by the heat conducting members of the insert between the central space of the heat conducting container and its wall, maintain good heat conductivity despite the rapid solidification of the PCM at the periphery near the walls of the container. Consequently, the stored thermal energy is rapidly delivered and thereby the freezing cycles are substantially shortened and the melting cycles are accelerated.

The heat conducting insert can be implemented in various ways, for example the insert can be manufactured in a shape of a brush with a plurality of heat conducting bristles, in a shape of a helical star with multiple star polygon shaped members, or a combination thereof.

The structure of the thermal energy storage apparatus of the present invention is simple and therefore its construction is relatively easy as well. An elongated tube, having at least one opening, is preferably used as a heat conducting container in which the heat conducting insert of the invention is installed such that its heat conducting elements are pressed against its inner wall. The heart conducting insert of the invention is preferably pushed into the tube via an opening thereof, after which the tube is filled with the PCM and its opening(s) are sealed.

The thermal energy storage apparatus of the invention may be used in the typical tubes and shell concept of structure, wherein a plurality of thermal energy storage tubes are arranged in parallel in a shell through which a heat exchange fluid is routed in contact with the outer surface of the storage apparatuses.

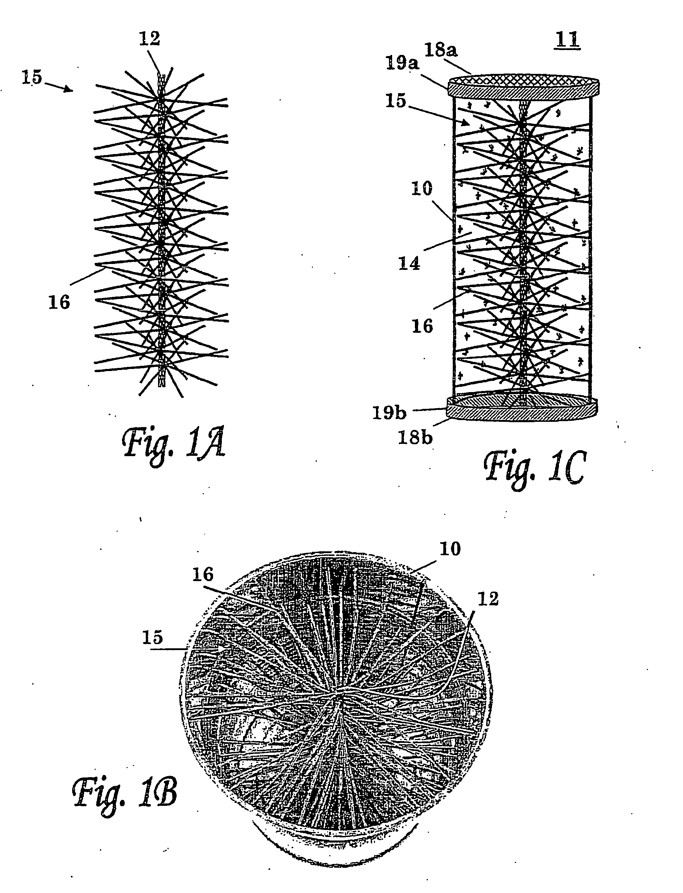

Figs. 1A to 1C schematically illustrates one preferred embodiment of the invention wherein the heat conducting insert **15** is implemented in a shape of a brush (hereinafter referred to as brush insert) comprising a plurality of heat conducting bristles made from metal wires (or ribbons) **16**. The thermal energy storage apparatus **11** is preferably made from a heat conducting tube **10** comprising one or more opening(s) through which its inner space may be accessed. Tube **10** may be structured from a metallic material, such as Aluminum or copper, preferably from carbon steal, which is favorable for operating temperatures in the range of 300 to 600°C. However, other materials may be found suitable for constructing thermal energy storage apparatus **11** in configurations that are designed to operate in different temperatures. Tube **10** may be formed in different geometrical shapes such as circular, elliptic, polygonal or star polygon shapes. According to a preferred embodiment of the invention tube **10** is made in a cylindrical shape having a diameter generally in the range of 20 to 200 mm, and thickness generally in the range of 1 to 5 mm.

Brush insert **15** is inserted into tube **10** preferably by pushing it into the tube **10** via an opening thereof. Heat conducting wires (or ribbons) **16** of brush insert **15** are preferably made from a heat conducting metal such as Aluminum, Copper, etc., preferably from Aluminum. The diameter of heat conducting wires **16** is generally in the range of 0.5 to 2 mm, and their length is generally in the range of 10 to 100 mm (about half of tube diameter).

Heat conducting wires **16** are attached to central member **12** at various points along its longitudinal length and extend outwardly therefrom, preferably radially, in a bristle like fashion. Central member **12** is preferably made from a heat conducting metal, such as aluminum or steel, preferably from copper. The diameter of brush insert **15** is generally in the range of 20 to 200 mm, preferably about 100 mm, and its length is about the same length as of tube **10.** In this way, after insertion of insert **15** into tube **10** and sealing the same by the top and bottom covers, **18a** and **18b,** heat conducting wires **16** are pressed against the inner wall of tube **10** and the top and bottom tips of central member **12** are pressed against the inner sides of top and bottom covers, **18a** and **18b,** respectively.

Central member **12** may be implemented by a rod and heat conducting wires may be welded or adhered thereto, or winded thereon. According to one preferred embodiment of the invention central member **12** is made from a braid of metal wires and heat conducting wires are threaded therethrough, such that two portions of each threaded wire extends outwardly therefrom, preferably radially, in more or less opposite directions.

Top and bottom covers **18a** and **18b** are preferably made from a heat conducting material, preferably from the same material tube **10** is made of. The diameter of covers **18** is adjusted to provide effective sealing of tube **10.** Covers **18** preferably comprise annular protrusions **19a** and **19b** vertically protruding from the plane of covers **18** at their edges, where said annular protrusions are adjusted to fit over the circumferential outer surface of the end portions of tube **10** and thereby tightly seal its openings.

After insertion of insert **15** into tube **10** and sealing at least one opening thereof by a cover **18** the PCM **14** may be introduced into tube **10,** followed by sealing the other opening(s) of tube **10** by suitable covers **18.** The inner space of tube **10** is preferably entirely filled by a PCM **14.** PCM **14** may comprise one or more types of PCM materials which are well known in the art. For example, for temperature of about 300°C the PCM is preferably comprised of NaNO₃.

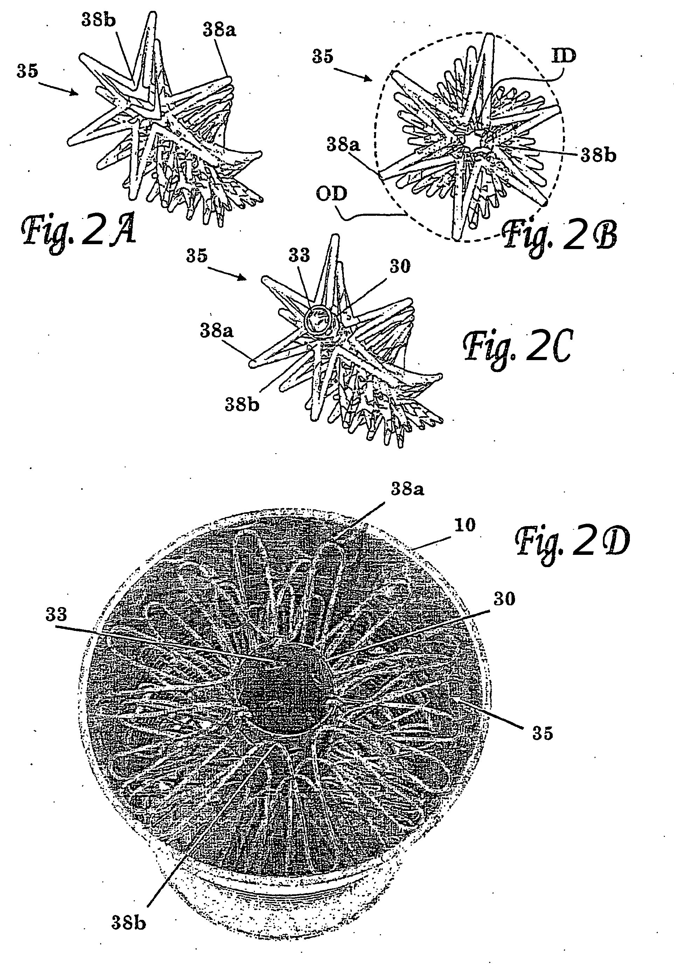

Figs. 2A to 2D demonstrate a further insert embodiment **35** constructed in form of a helical star (hereinafter referred to as helical star insert). Helical star insert **35** is preferably made from a heat conducting wire (or ribbon) curved in a form which includes a plurality of apex points **38a,** placed on the cross-sectional outer diameter **OD**, and base points **38b,** placed on the cross-sectional inner diameter **ID,** and which are attached at circumferential points to a central support **30**. The attachment points of base points **38b** along the outer surface of central support **30** are preferable distributed annularly about the central axis of central support in form of a helix such that the distance of successive base points **38b** from one of the central support's ends gradually increase. Apex points **38a** form a similar helix shape, such that when helical star **35** is inserted into tube **10,** apex points **38a** are pressed against its inner wall annularly about the central axis of tube **10** at circumferential points which their distance from one of the tube's ends gradually increase.

As shown in Figs. 2A and 2B helical star insert **35** may be also implemented without central support **30.** Figs. 2C and 2D demonstrates the helical star insert **35** of the invention when implemented with central support **30,** wherein Fig. 2D shows such an implementation when inserted into a tube **10.**

Central support **30** may be constructed from any type of suitable material (e.g., heat conducting and/or resilient), as known in the art. It is preferably made from a heat conducting sheet, such as copper, preferably from aluminum, rolled into a form of an elongated tube having radial resiliency about its longitudinal axis for applying radial forces on points **38a** and **38b,** thereby pressing apex points **38a** against the inner wall of tube 10. Transfer apertures **33** may be provided at different locations along central support **30** to allow migration of PCM therethrough.

Some, or all, of base points **38b** may be welded, adhered, or attached by wire windings to central support **30.** Central support **30** is preferably made from a heat conducting sheet, such as copper, preferably from aluminum, rolled into an elongated tube form, and in such implementation it preferably further comprise transfer apertures **33** at different locations thereon to enable migration of PCM therethrough.

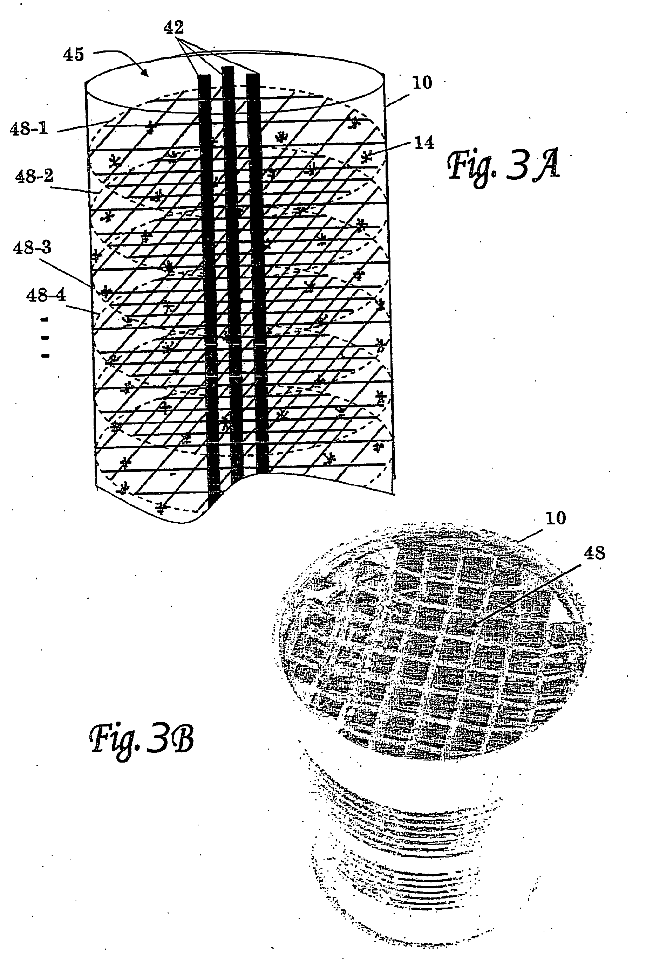

Figs. 3A to 3B demonstrate an insert embodiment **45** wherein the insert is constructed from a plurality of circular heat conducting mesh members, **48-1, 48-2, 48-3,...,.** As shown in Fig. 3A, mesh members **48-1, 48-2, 48-3,... ,** may be attached to central rod(s) **42.** Mesh members **48** may be welded, adhered, or attached by wire windings to central rod(s) **42.** The diameter of mesh members **48** is adjusted according to the diameter of tube **10** to allow fitting them tightly thereinto such that their circumferences are pressed against its inner wall. Mesh members may be fabricated from a heat conducting mesh made from a type of steel or copper, preferably from aluminum, and their thickness is generally in the range of 0.5 to 4 mm, preferably about 1 mm. Rod(s) **42** is preferably made from a heat conducting material, such as copper or aluminum, preferably from steel, and its diameter is generally in the range of 1 to 6 mm, preferably about 2 mm.

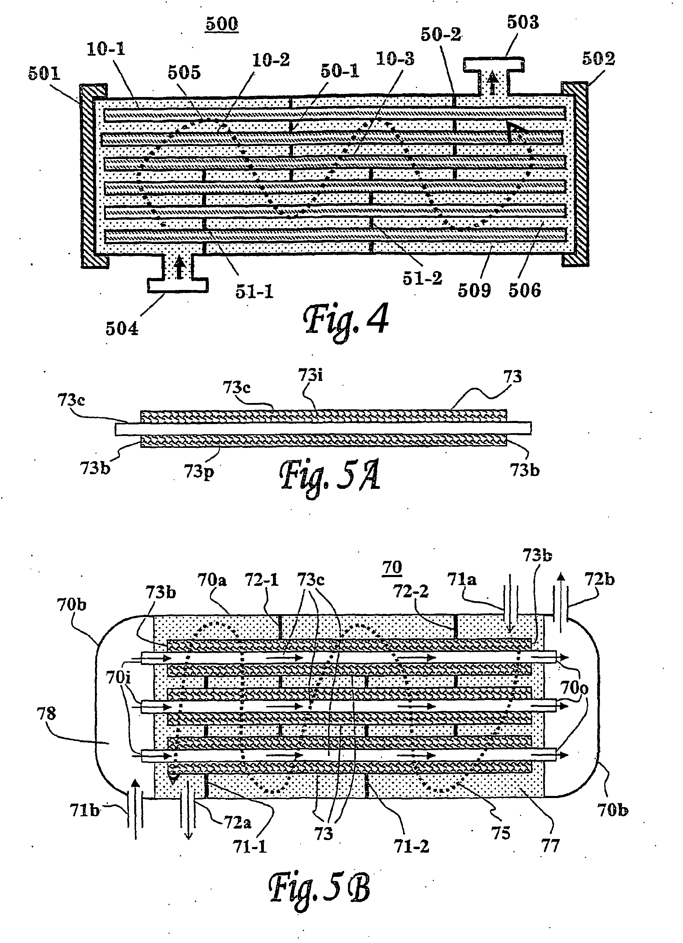

Fig. 4 illustrates a preferred tubes and shell implementation utilizing thermal heat storage apparatuses, **10-1, 10-2, 10-3,** ..., of the present invention. In this implementation a plurality of thermal heat storage apparatuses (e.g., tubes), **10-1, 10-2, 10-3,...,** are placed in parallel inside thermally insulated vessel **500,** along its length. Vessel **500** may be constructed from a cylindrical hollow medium sealed by end caps **501** and **502** attached to end openings. While in this example vessel **500** is horizontally positioned such that its longitudinal axis is parallel to the ground surface, it should be noted that it may be similarly positioned vertically, namely - such that its longitudinal axis is perpendicular to the ground surface.

Heat exchange fluid inlet **504** is preferably provided at the lower lateral side of vessel **500,** near one end thereof (e.g., **501**), and a heat exchange fluid outlet **503** is preferably provided at the upper lateral side of vessel **500,** near its other end (e.g., **502**). Of course, the heat exchange fluid may flow in the other direction. Thermal heat storage apparatuses **10-1, 10-2,...,** are fastened inside vessel **500** via a set of tube supporting partitions **50** and **51.**

The upper tube supporting partitions **50-1, 50-2,...,** extends downwardly from the inner top sections of vessel **500,** and lower tube supporting partitions **51-1, 52-2,...,** extends upwardly from the inner bottom sections of vessel **500.** Upper and lower tubes supporting partitions **50** and **51** are placed in intertwining form, thereby forcing a flow path (indicated by arrow **505**) of heat exchange fluid **509** the direction of which alternates inside vessel **500,** namely - the flow direction is zigzagged between up and down flow directions. In this way the heat exchange between thermal storage apparatuses **10-1, 10-2,...,** and the heat transfer fluid is maximized.

Vessel **500** may be fabricated from a ferrous material, such as steel, preferably from carbon steel. As will be understood by those skilled in the art the range of the geometrical dimensions of vessel **500** should be adjusted according to the requirements of each specific application. Accordingly, the design of vessel **500** should consider the number of thermal storage apparatuses that vessel **500** should comprise and the desirable length of said apparatuses. In this way thermal storage apparatuses may be horizontally installed therein via upper and lower tubes supporting partitions **50** and **51** such that a minimal gap is obtained between their ends and the inner surface of end caps **501** and **502.**

End caps **501** and **502** may be fabricated from any suitable material. For example, caps **501** and **502** may be fabricated from the same material from which vessel **500** is made. Caps **501** and **502** are adjusted to fit over the outer surfaces of end section of vessel **500** and seal its end openings. Upper and lower tubes supporting partitions **50** and **51** may be fabricated from a type of steel, preferably from carbon steel, and they are designed to block about 90% of the cross section area of vessel **500.** Heat exchange fluid **506** may comprise thermal oil, in a preferred embodiment of the invention it comprises Therminol VP1 of Solutia (St. Louis, USA) or Syltherm 800 of Dow Chemicals, and its flow rate inside vessel **500** is selected to maintain optimal heat transfer.

The flow rate of heat transfer fluid **509** during the melting cycle may generally be in the range of 20 to 100 m³/Hr for a 1MWₜₕh storage unit (thermal megawatt-hour), and during the freezing cycle in the range of 40 to 200 m³/Hr for said unit.

Fig. 5A schematically illustrates a longitudinal-section view of a thermal energy storage apparatus **73** of the present invention having a central conduit **73c** passing longitudinally along its length in thermal contact with the heat conducting insert **73i** contained therein. As shown in Fig. 5A, the interior of thermal energy storage apparatus **73** is filled with a PCM **73p,** and the ends of central conduit **73c** protrudes outwardly from the bases **73b** of thermal energy storage apparatus **73.**

Most preferably, internal conduit **73c** is used as a central support element of the heat conducting insert such that it passes coaxially along the length of the thermal energy storage apparatuses **73c** having the heat conducting elements of said heat conducting insert attached to its external surface. Internal conduit **73c** is preferably used as a central member of heat conducting insert **73i,** for example, internal conduit **73c** may be used as central support **30** of helical star insert **35** (shown in Figs. 2C-2D), and/or as central rod **42** of heat conducting insert **45** (shown in Fig. 3A).

Fig. 5B schematically illustrates a thermal energy storage implementation comprising a vessel **70** and thermal energy storage apparatuses **73,** said vessel **70** and thermal energy storage apparatuses **73** are configured such that two different flow paths for heat exchange fluids are formed. In this embodiment of the invention the thermal energy storage apparatuses **73** comprise an internal conduit **73c,** as described hereinabove with reference to Fig. 5A. As shown in Fig. 5B, the extremities of internal conduits **73c** protrudes outwardly from the bases **73b** of thermal energy storage apparatuses **73** such that their interiors are accessible via opening **70i** and **70o** thereof.

Vessel **70** comprises a main chamber **70a** in which thermal energy storage apparatuses **73** are installed, and two auxiliary chambers **70b.** Energy storage apparatuses **73** are installed in the main chamber **70a** such that portions of the extremities of internal conduits **73c** are introduced into auxiliary chambers **70b** thereby providing fluid flow communication between the interiors of said auxiliary chambers **70b** and of said internal conduits **73c.**

Main chamber **70a** comprises a fluid inlet **71a** and a fluid outlet **72a** through which a first heat transfer fluid **77** may be streamed. Fluid inlet **71a** and fluid outlet **72a** are preferably provided on opposing lateral sides of main chamber **70a** at longitudinally distant locations. For example, as exemplified in Fig. 5, fluid inlet **71a** is provided near one end of main chamber **70a** while fluid outlet **72a** is provided at the opposing lateral side near the other end of main chamber **70a.**

Each of the auxiliary chambers **70b** comprises at least one fluid port for streaming a second heat transfer fluid **78** therebetween via internal conduits 73c of energy storage apparatuses **73.** As shown in Fig. 5, a first fluid port **71b** provided in one auxiliary chamber **70b** may be used as inlet, while another fluid port **72b,** which may be located on an opposing lateral side of vessel **70,** in the other auxiliary chamber **70b,** may used as an outlet of said second heat exchange fluid.

Vessel **70** preferably comprises upper partitions **72-1, 72-2,...,** extending downwardly from the inner top sections of main chamber **70a,** and lower partitions **71-1, 71-2,...,** extending upwardly from the inner bottom sections of main chamber **70a.** Upper and lower partitions **71** and **72** are placed in intertwining form, thereby forcing a flow path (designated by arrow **75)** of a first heat transfer fluid **77** the direction of which alternates inside main chamber **70a,** namely - the flow direction is zigzagged between up and down flow directions.

Vessel **70** may be made from a ferrous material, such as steel, preferably from carbon steel. The volume of main chamber **70a** may generally be of about 13,000 liters for a 1 MWₜₕh unit, and the volume of each of the auxiliary chambers **70b** may generally be in the range of 800 to 2000 liters.

Internal conduits **73c** may be made from a metallic material, such as Aluminum or copper, preferably from carbon steal. The inner diameter of internal conduits **73c** may generally be of about 30mm for a 1MWₜₕh unit, and their lengths may generally be in the range of 3 to 6 meters for that unit.

The first heat exchange fluid passed via main chamber **70a** is preferably used for transferring thermal energy to the energy storage apparatuses **73** contained therein, and it may be implemented by water (or steams) or by type of oil, preferably by a heat transfer oil, such as, but not limited to, Therminol VP1 of Solutia.

The second heat exchange fluid passed via auxiliary chambers **70b** is preferably used for removing thermal energy from the energy storage apparatuses **73** contained therein, and it may be implemented by water (or steams) or by type of oil, preferably by water steams.

It should be noted that the thermal energy storage of the apparatus of the present invention is suitable for a wide range of thermal energy storage applications. The same energy storage tubes may be used in various ranges of powers/energies, and they may be adjusted to operate in different temperatures simply by choosing a suitable PCM. The present invention therefore provides a generic solution for thermal heat storage applications, which may be easily adjusted to suit the specific requirements.

All of the abovementioned parameters are given by way of example only, and may be changed in accordance with the differing requirements of the various embodiments of the present invention. Thus, the abovementioned parameters should not be construed as limiting the scope of the present invention in any way. In addition, it is to be appreciated that the different tubes, containers, and other members, described hereinabove may be constructed in different shapes (e.g. having oval, square etc. form in plain view) and sizes from those exemplified in the preceding description.

### Example 1

Table 1 lists the results obtained in a set of simulating experiments which were performed using a small test model. These experiments were carried out using a thermal energy storage apparatus constructed from a cylindrical tube having a diameter of 100 mm, made from steel in a thickness of 1 mm. The cylindrical tube was filled with a NaNO₃/KNO₃ mixture having 250 °C fusion temperature, and it was tested without thermal energy transferring insert and with the various insert types demonstrated hereinabove. The thermal energy storage apparatus was installed in a container through which PazTherm22 heat transfer fluid was circulated. During the melting cycle the temperature of the heat transfer fluid was 260 °C which heated the PCM to about 250 °C, and it was cooled to 240 °C for releasing the stored thermal energy in the freezing cycle.

**TABLE 1:**

| **Insert type** | **Duration of stored energy extraction[min]** |
|---|---|
| No insert | 128 |
| Brush insert | 32 |
| Spiral star insert | 40 |
| Mesh insert | 34 |

The time required for complete extraction of the stored energy is presented in table 1 for the same tube without inserts, and with inserts of several designs. As shown in table 1 there were significant improvements in the performance of the energy storage apparatus when tested with a thermal energy transferring insert. These experimental results show that the time duration required for the storage tube to deliver its energy is substantially shortened (to about 1/3 tripling the power) when the thermal energy transferring insert was used.

### Example 2

The following demonstration is a specific example for a thermal energy storage system of the invention that is designed to operate in 307°C using NaNO₃ as a PCM and VP1 as heat transfer fluid. This system is designed for storing about 1 MWₜₕh within 4 hours (i.e., power of 250kWₜₕ) and for delivering the same in about 2 hours (i.e., power of 500kWth).

In this example the thermal energy storage apparatus is implemented utilizing an elongated heat conducting tube containing the PCM and an elongated aluminum star insert. The elongated star insert consists of six apex points and it is of the same length as the heat conducting tube.

Table 2 provides geometric parameters of the exemplified thermal energy storage apparatus:

**TABLE 2:**

| **Parameter** | **Size/Quantity** | **Notes** |
|---|---|---|
| Tube inner diameter | 10cm | |
| Tube length | 400cm | made of Carbide Steel |
| Tube volume | 31.416 liter | |
| Number of tubes | 310 | |
| Total volume | 9739 liter | |
| Latent heat per liter | 0.116 kWₜₕh/liter | |
| Fill coefficient - PCM filling factor | 0.9 | |
| Total energy storage | 1016.7 kWₜₕh | for 100% efficiency |
| Tubes fill coefficient - Volume of tubes to vessel volume ratio | 0.79 | |
| Thickness of tube wall | 0.15cm | |
| Vessel's inner diameter | 204cm | |
| Vessel's volume | 13074 liter | |
| Volume of energy storage tubes | 10332.1 liter | |
| Volume of heat transfer fluid | 2742 liter | |
| Heat transfer fluid to PCM volume ratio | 28.2% | |
| PCM weight | 22010Kg | density of about 2.6 at fusion temperature |
| Sensible heat in heat transfer fluid | 14.38 kWₜₕh/10°C | THERMINOL VP-1 |
| Heat transfer fluid flow rate required for transferring the heat in 2 Hours | 26.93 liter/sec | |

| | | |
|---|---|---|
| (kWₜₕh - thermal kilowatt-hour) | | |

## Claims

1. A thermal energy storage apparatus (11) for delivering thermal energy to or from a PCM (14), comprising an elongated heat conducting container (10) having a thermal energy transfer element (15) placed therein, wherein:
said thermal energy transfer element is insertable and has a longitudinal axis;
said thermal energy transfer element comprises a plurality of flexible heat conducting members (16) made from heat conducting wires or strips disposed transversal to said longitudinal axis and capable of forming heat transfer paths, at least a portion of said heat conducting members is in contact with the inner wall of said container; and
said plurality of members are arranged along said longitudinal axis of said element and occupy cross sectional portions thereof such that non overlapping heat conducting paths are obtained in said cross sectional portions.

2. The thermal energy storage apparatus of claim 1, wherein the plurality of heat conducting members (16) are attached to a central supporting member (12) thereof such that they may be tilted about their lateral axes.

3. The thermal energy storage apparatus of claim 2, wherein the central supporting member (12) is made from a heat conducting rod, tube, conduit, or wires.

4. A thermal energy storage apparatus for delivering thermal energy to or from a PCM, comprising an elongated heat conducting container (10) having a thermal energy transfer element (35) placed therein, wherein :
said thermal energy transfer element is insertable and has a longitudinal axis; and
said thermal energy transfer element comprises a flexible heat conducting member curved in a shape of a helical star, the apex points (38a) of which are in contact with the inner wall of the heat conducting container, and its base points (38b) are arranged along said longitudinal axis such that it occupies cross sectional portions of said elongated heat conducting container such that non overlapping heat conducting paths are obtained in said cross sectional portions.

5. The thermal energy storage apparatus of claim 4, further comprising a central supporting member (33), wherein the base points (38b) of the thermal energy transfer element are attached to said central supporting member.

6. The thermal energy storage apparatus according to claim 5, wherein the central supporting member (33) is made from a thermally conducting conduit suitable for streaming a heat exchange fluid therethrough.

7. A thermal energy storage system for delivering thermal energy to or from a PCM comprising a thermally insulated vessel (500) in which thermal energy storage apparatuses (10-1, 10-2,...) are installed, wherein said thermally insulated vessel comprises at least one inlet (504) and at least one outlet (503) for streaming a heat exchange fluid (509) via the interior of said vessel such that the heat exchange fluid streamed therethrough contacts the outer surfaces of said thermal energy storage apparatuses, and wherein some or all of said thermal energy storage apparatuses are according to claim 1 or 4.

8. A thermal energy storage system according to claim 7, wherein the thermal energy storage apparatuses (73) comprise central conduits (73c) to which the thermal energy transferring elements are attached, the extremities of said central conduits protrudes outwardly from said thermal energy storage apparatuses, and wherein the thermally insulated vessel further comprises two auxiliary chambers (70b) each of which being in fluid flow communication with said central conduits via their protruding extremities for streaming another heat exchange fluid (78) therethrough.

## Patentansprüche

1. Wärmeenergiespeichervorrichtung (11) zur Abgabe von Wärmeenergie an oder aus einem Latentwärmespeichermaterial (14), die einen länglichen wärmeleitenden Behälter (10) mit einem darin angeordneten Wärmeenergieübertragungselement (15) aufweist, wobei:
das Wärmeenergieübertragungselement einsetzbar ist und eine Längsachse aufweist;
das Wärmeenergieübertragungselement mehrere flexible wärmeleitende Glieder (16) aufweist, die aus wärmeleitenden Drähten oder Streifen bestehen, die quer zur Längsachse angeordnet und fähig sind, Wärmeübertragungswege zu bilden,
wobei mindestens ein Teil der wärmeleitenden Glieder mit der Innenwand des Behälters in Kontakt steht; und
die mehreren Glieder längs der Längsachse des Elements angeordnet sind und Querschnittsabschnitte davon einnehmen,
so dass keine sich überlappenden wärmeleitenden Wege in den Querschnittsabschnitten erhalten werden.

2. Wärmeenergiespeichervorrichtung nach Anspruch 1, wobei die mehreren wärmeleitenden Glieder (16) an einem zentralen Halteglied (12) davon angebracht sind, so dass sie um ihre lateralen Achsen gekippt sind.

3. Wärmeenergiespeichervorrichtung nach Anspruch 2, wobei das zentrale Halteglied (12) aus einem wärmeleitenden Stab, einer Röhre, einem Kanal oder Drähten besteht.

4. Wärmeenergiespeichervorrichtung zur Abgabe von Wärmeenergie an oder aus einem Latentwärmespeichermaterial, die einen länglichen wärmeleitenden Behälter (10) mit einem darin angeordneten Wärmeenergieübertragungselement (35) aufweist, wobei:
das Wärmeenergieübertragungselement einsetzbar ist und eine Längsachse aufweist;und
das Wärmeenergieübertragungselement ein flexibles wärmeleitendes Glied aufweist, das in einer Form eines spiralförmigen Sterns gekrümmt ist, dessen Scheitelpunkte (38a) mit der Innenwand des wärmeleitenden Behälters in Kontakt stehen, und seine Basispunkte (38b) längs der Längsachse angeordnet sind, so dass er Querschnittsabschnitte des länglichen wärmeleitenden Behälters einnimmt, so dass keine sich überlappenden wärmeleitenden Wege in den Querschnittsabschnitten erhalten werden.

5. Wärmeenergiespeichervorrichtung nach Anspruch 4, die ferner ein zentrales Halteglied (33) aufweist, wobei die Basispunkte (38b) des Wärmeenergieübertragungselements am zentralen Halteglied befestigt sind.

6. Wärmeenergiespeichervorrichtung nach Anspruch 5, wobei das zentrale Halteglied (33) aus einem wärmeleitenden Kanal besteht, der geeignet ist, eine Wärmetauschflüssigkeit dort hindurch strömen zu lassen.

7. Wärmeenergiespeichersystem zur Abgabe von Wärmeenergie an oder aus einem Latentwärmespeichermaterial, das einen wärmegedämmten Kessel (500) aufweist, in dem Wärmeenergiespeichervorrichtungen (10-1, 10-2,...) eingebaut sind, wobei der wärmegedämmte Kessel mindestens einen Einlass (504) und mindestens einen Auslass (503) aufweist, um eine Wärmetauschflüssigkeit (509) über das Innere des Kessels strömen zu lassen, so dass die dort hindurch strömende Wärmetauschflüssigkeit die Außenseiten der Wärmeenergiespeichervorrichtungen berührt, und wobei einige oder alle Wärmeenergiespeichervorrichtungen nach Anspruch 1 oder 4 gestaltet sind.

8. Wärmeenergiespeichersystem nach Anspruch 7, wobei die Wärmeenergiespeichervorrichtungen (73) zentrale Kanäle (73c) aufweisen, an denen die Wärmeenergieübertragungselemente angebracht sind, die Endpunkte der zentralen Kanäle aus den Wärmeenergiespeichervorrichtungen nach außen vorstehen, und wobei der wärmegedämmte Kessel ferner zwei Hilfskammern (70b) aufweist, von denen jede über ihre vorstehenden Endpunkte in Flüssigkeitsfließverbindung mit den zentralen Kanälen stehen, um eine andere Wärmetauschflüssigkeit (78) dort hindurch strömen zu lassen.

## Revendications

1. Appareil de stockage d'énergie thermique (11) destiné à délivrer de l'énergie thermique à un matériau à changement de phase (14) ou de l'énergie thermique provenant de ce dernier, comprenant un conteneur thermoconducteur oblong (10) avec un élément de transfert d'énergie thermique (15) disposé à l'intérieur de celui-ci, où :
l'élément de transfert d'énergie thermique est insérable et présente un axe longitudinal ;
l'élément de transfert d'énergie thermique comporte une pluralité d'organes thermoconducteurs flexibles (16) formés de fils métalliques thermoconducteurs ou de bandes disposées transversalement à l'axe longitudinal et prévus pour réaliser des passages de transfert de chaleur, au moins une partie des éléments thermoconducteurs étant au contact de la paroi intérieure du conteneur ; et où
les plusieurs organes sont disposés le long de l'axe longitudinal de l'élément et occupent des parties de la section transversale de celui-ci, de manière à obtenir des passages thermoconducteurs non chevauchants dans les parties de section transversale.

2. Appareil de stockage d'énergie thermique selon la revendication 1, où les plusieurs organes thermoconducteurs (16) sont fixés à un organe central de support (12), de manière à pouvoir être pivotés autour de leurs axes latéraux.

3. Appareil de stockage d'énergie thermique selon la revendication 2, où l'organe central de support (12) est formé d'une barre, d'un tube, d'un conduit ou de fils métalliques thermoconducteurs.

4. Appareil de stockage d'énergie thermique destiné à délivrer de l'énergie thermique à un matériau à changement de phase ou de l'énergie thermique provenant de ce dernier, comprenant un conteneur thermoconducteur oblong (10) avec un élément de transfert d'énergie thermique (35) disposé à l'intérieur de celui-ci, où
l'élément de transfert d'énergie thermique est insérable et présente un axe longitudinal ; et où
l'élément de transfert d'énergie thermique comporte un organe thermoconducteur flexible courbé sous forme d'une étoile hélicoïdale, dont les points de sommets (38a) sont en contact avec la paroi intérieure du conteneur thermoconducteur, et dont les points de bases (38b) sont disposés le long de l'axe longitudinal, de manière à occuper des parties de la section transversale du conteneur, de telle sorte que des passages thermoconducteurs non chevauchants sont réalisés dans les parties de section transversale.

5. Appareil de stockage d'énergie thermique selon la revendication 4, comprenant en outre un organe central de support (33), les points de bases (38b) de l'élément de transfert thermique étant fixés audit organe central de support.

6. Appareil de stockage d'énergie thermique selon la revendication 5, où l'organe central de support (33) consiste en un conduit thermoconducteur permettant l'écoulement d'un fluide échangeur de chaleur.

7. Système de stockage d'énergie thermique destiné à délivrer de l'énergie thermique à un matériau à changement de phase ou de l'énergie thermique provenant de ce dernier, comprenant un réservoir thermiquement isolé (500) où sont montés des appareils de stockage d'énergie thermique (10-1, 10-2,...), où le réservoir thermiquement isolé comprend au moins une entrée (504) et au moins une sortie (503) pour l'écoulement d'un fluide échangeur de chaleur (509) à l'intérieur du réservoir, de telle manière que le fluide échangeur de chaleur qui s'écoule dans celui-ci entre au contact des surfaces extérieures des appareils de stockage d'énergie thermique, et où certains des appareils de stockage d'énergie thermique, ou la totalité de ceux-ci sont réalisés selon les revendications 1 à 4.

8. Système de stockage d'énergie thermique selon la revendication 7, où les appareils de stockage d'énergie thermique (73) comprennent des conduits centraux (73c) auxquels sont fixés les éléments de transfert d'énergie thermique, les extrémités des conduits centraux dépassant extérieurement des appareils de stockage d'énergie thermique, et où le réservoir thermiquement isolé comprend en outre deux compartiments auxiliaires (70b), chacun de ceux-ci étant en communication d'écoulement fluidique avec les conduits centraux par leurs extrémités dépassantes, pour l'écoulement d'un autre fluide échangeur de chaleur (78) dans ceux-ci.
